# EUROPÄISCHE PATENTSCHRIFT

(11) **EP 0 429 879 B1**
(45) Veröffentlichungstag und Bekanntmachung des Hinweises auf die Patenterteilung: **15.06.1994**
(21) Anmeldenummer: 90120957.7
(22) Anmeldetag: 01.11.1990
(51) Int. Cl.: A23K 1/00

(54) **Ergänzungsfutter für Jung-Säugetiere**
Feed supplement for young mammals
Supplément alimentaire pour jeunes mammifères

(30) Priorität: 04.11.1989 DE 3936799
(43) Veröffentlichungstag der Anmeldung: 05.06.1991
(73) Patentinhaber: SANOFI-CEVA Gesellschaft mit beschränkter Haftung, 40472 Düsseldorf (DE)
(72) Erfinder: Abele, Ulf, Dr., D-80804 München (DE); Schaette, Roland, Dr., D - 88339 Bad Waldsee (DE)
(74) Vertreter: Türk, Gille, Hrabal, Leifert

(56) Entgegenhaltungen:
- WO-A-89/08991
- DE-A- 2 225 483
- US-A- 2 906 621
- US-A- 4 034 120
- US-A- 4 826 692
- CHEMICAL ABSTRACTS, Band 107, Nr. 1, Juli 1987, Seite 563, Zusammenfassung Nr. 6072z, Columbus, Ohio, US; & HU-A-39 985 (I. HUTAS et al.) 28-11-1986
- CHEMICAL ABSTRACTS, Band 105, Nr. 7, August 1986, Seite 537, Zusammenfassung Nr. 59733f, Columbus, Ohio, US; & JP-A-61 58 543 (Y. KOBAYASHI) 25-03-1986

## Beschreibung

Die vorliegende Erfindung betrifft ein Ergänzungsfuttermittel für Jung-Säugetiere, das auf 1 x 10⁹ Keime eines Mikroorganismus als Probiotikum, 1000 bis 20000 internationale Einheiten Vitamin A und 5 bis 50 mg Vitamin E sowie Trägerstoffe enthält.

Jung-Säugetiere sind in den ersten Lebenswochen aufgrund einer noch nicht ausgereiften Immunabwehr besonders anfällig gegen Infektionen, die durch zahlreiche Keime hervorgerufen werden. Solche Keime werden von den Jung-Säugetieren besonders oral aufgenommen, haften an der Schleimhautschicht, penetrieren die Schleimhautschicht des Darms und rufen die spezifischen Infektionskrankheiten hervor. Besonders anfällig für solche Infektionen sind Jung-Säugetiere, die ein geringes Geburtsgewicht haben, unter verstärktem Infektiondsdruck stehen oder eine, bedingt durch fehlende maternale Schutzstoffe, zusätzlich geschwächte Immunabwehr besitzen. Durch Infektionskrankheiten wird die Nahrungsaufnahme und Futterverwertung durch die Jung-Säugetiere ebenfalls verschlechtert, so daß ein großer Anteil der Jung-Säugetiere in den ersten Lebenswochen infolge der Infektionskrankheiten eingeht.

Zur Steigerung der Widerstandskraft der Jung-Säugetiere in den ersten Lebenswochen sind verschiedene Ergänzungsfuttermittel im Stand der Technik bekannt.

In Entgegenhaltung US-A-2906621 wird ein Futter für Ferkel beschrieben, das aus unabgebautem Proteinmaterial in Kombination mit einem aktiven proteolytischen Enzym besteht. Dieser Kombination können auch lipolytische Enzyme beigemischt werden.

US-A-4826692 offenbart eine Diätvorschrift für Stierkälber, wobei die Diät aus einem fettarmen Teil, bestehend aus Protein, geringen Fettmengen, Fasern, Mineralien und Vitaminen besteht, sowie einem balaststoffreichen Anteil aus Stroh.

In Chemical abstract nr. 107:6072Z ist ein Milchersatz-Futter für Jungtiere offenbart, das durch Hydrolyse von protein- und stärkehaltigen Materialien tierischen oder pflanzlichen Ursprungs gewonnen wird. Dem Milchersatz-Futter können Pansen-Flora und Vitamine beigemischt werden.

In DE-A-2225483 ist ein Zusatzfutter für Ferkel offenbart, bestehend aus einem Gemisch von Torfstreu mit einem Milchpräparat als Träger für Zusatzstoffe wie Spurenelemente und Vitamine.

In US-A-4034120 ist ein Pelletierhilfsmittel für eßbare Balaststoffe beschrieben, das im wesentlichen aus einem organischen Fett und einem anorganischen Material besteht. Als Fett werden entweder tierisches oder pflanzliches Fett, hydrierte Pflanzenöle oder Mischungen daraus verwendet. Als anorganisches Material ist Vermiculit erwähnt.

In WO-A-8908991 schließlich ist ein Stärke, Vitamine und mit Mineralien umfassendes Futter für Jungtiere beschrieben, das infolge eines speziellen Verhältnisses von Casein zu Molke, einer gelatinierten Stärke und einem Gehalt an organischen, sauren Komponenten gekennzeichnet ist und im wesentlichen frei von anderen Mineralien und Fasern ist.

Besonders gute Ergebnisse zur Steigerung der Widerstandskraft wurden beispielsweise bei Ferkeln mit eisenhaltigen sowie vitaminhaltigen Pasten erzielt, die weiterhin zu einem besseren und konstanteren Wachstumsprozeß und einer insgesamt verbesserten Vitalität der Saugferkel führen. Die üblichen Pasten besitzen jedoch durch die Verwendung von Schweineschmalz oder ähnlichen Fetten als Trägerstoffe und deren Einfluß auf die Haltbarkeit der verwendeten Bakterien nur einebegrenzte Lagerfähigkeit.

Da eine Verbesserung der zuvor genannten Eigenschaften jedoch nicht bei allen Jung-Säugetieren gegenüber vielen Infektionskrankheiten gleichmäßig zu erzielen war, bestand die Aufgabe der Erfindung darin, ein Ergänzungsfuttermittel für Jung-Säugetiere bereit zu stellen, das den Jung-Säugetieren eine gestärkte Widerstandskraft gegenüber einer Vielzahl von Infektionen gibt und zu einem gleichmäßigeren und schnelleren Wachstumsprozeß verhilft.

Seitens der Erfinder wurde nun überraschend gefunden, daß ein Ergänzungsfuttermittel, das einen Mikroorganismus als Probiotikum, Vitamin A und Vitamin E sowie als Trägerstoffe Pflanzenöl und hochdisperse Kieselsäure und als weiteren Inhaltsstoff Lipase enthält, eine hervorragende Lagerfähigkeit aufweist und die Widerstandsfähigkeit der Jung-Säugetiere gegenüber Infektionskrankheiten merklich erhöht.

Die Aufgabe der Erfindung wird gelöst durch Bereitstellung eines Ergänzungsfuttermittels für Jung-Säugetiere, enthaltend, auf 1 x 10⁹ Keime eines Mikroorganismus als Probiotikum, 1000 bis 20000 internationale Einheiten Vitamin A und 5 bis 50 mg Vitamin E sowie Trägerstoffe, das dadurch gekennzeichnet ist, daß das Ergänzungsfuttermittel auf 1 x 10⁹ Keime des Mikroorganismus von 10 bis 1000 »g Lipase und als Trägerstoffe Pflanzenöl und hochdispersen Trägerstoff mit einer spezifischen Oberfläche von mehr als 20 m²/g in einem Mengenverhältnis des Pflanzenöls zum hochdispersen Trägerstoff von 5:1 bis 20:1 enthält.

Die Verwendung des erfindungsgemäßen Ergänzungsfuttermittels führt zu einer erhöhten überlebensrate der Jung-Säugetiere in den ersten Lebenswochen und verringert beträchtlich das Auftreten der anfänglichen Diarrhöen in den ersten Lebenstagen. Durch verbesserte Nahrungsaufnahme und Verwertung wird die Anzahl der schwächlichen Jung-Säugetiere vermindert, die Widerstandskraft erhöht und ein schnelleres und konstanteres Wachstum des ganzen Wurfes erreicht.

Das Ergänzungsfuttermittel enthält einen Mikroorganismus als Probiotikum, wie dies aus dem Stand der Technik bekannt ist. Dieser Mikroorganismus wird, wie bei bekannten Mitteln zweckmäßig, aus der Gruppe der Milchsäurebakterien ausgewählt. Besonders bevorzugt ist die Verwendung von Enterococcus faecium M 74, der bei der Deutschen Sammlung von Mikroorganismen in D-3300 Braunschweig am 31.07.1989 unter der Nr. DSM 5464 hinterlegt wurde.

Das Ergänzungsfuttermittel enthält pro 1 x 10⁹ Keime probiotischer Mikroorganismen zweckmäßig 2000 bis 10000 mg internationale Einheiten Vitamin A. Vorzugsweise liegt die Mindestmenge bei 6000. Die Höchstmenge liegt vorzugsweise bei 9000.

Das Ergänzungsfuttermittel enthält pro 1 x 10⁹ Keime ferner probiotischer Mikroorganismen 5 bis 50 mg Vitamin E. Vorzugsweise liegt die Mindestmenge bei 20 mg. Die Höchstmenge liegt vorzugsweise bei 30 mg.

Für gewisse Jung-Säugetiere, insbesondere Saugferkel, Kälber und Hunde enthält das Ergänzungsfuttermittel pro 1 x 10⁹ Keime probiotischer Mikroorganismen zweckmäßig 2 bis 50 »g, vorzugsweise 4 bis 20 »g Vitamin B 12. Vorzugsweise liegt die Mindestmenge bei 5 »g. Die Höchstmenge liegt vorzugsweise bei 10 »g.

Für andere Jung-Säugetiere enthält das Ergänzungsfuttermittel zweckmäßig pro 1 x 10⁹ Keime eines Mikroorganismus als Probiotikum 5 bis 100 mg einer oral verabreichbaren und assimilierbaren Eisenverbindung. Dies gilt besonders für Saugferkel.

Das Ergänzungsfuttermittel enthält als oral verabreichbare assimilierbare Eisenverbindungen wie nach dem Stand der Technik zweckmäßig eine Verbindung aus der Gruppe Eisen-(II)-carbonat, Eisen-(II)-chlorid und dessen Tetrahydrat, Eisen-(III)-chlorid und dessen Hexahydrat, Eisen-(II)-citrat und dessen Hexahydrat, Eisen-(II)-fumarat, Eisen-(II)-lactat und dessen Trihydrat, Eisen-(III)-oxid, Eisen-(II)-sulfat und dessen Heptahydrat, oder andere Hydrate, soweit diese Eisenverbindungen futtermittelrechtlich zugelassen sind. Besonders bevorzugt ist dabei die Verwendung von Eisen-(II)-fumarat. Eisen-II-Verbindungen werden bevorzugt verwendet, da sie reduzierend wirken, d.h. die Oxidation des Trägerstoffs Pflanzenöl und damit dessen Verderb vermindern.

Das Ergänzungsfuttermittel enthält pro 1 x 10⁹ Keime probiotischer Mikroorganismen zweckmäßig 7 bis 35 mg der oral verabreichbaren und assimilierbaren Eisenverbindung, berechnet als Eisen. Vorzugsweise liegt die Mindestmenge bei 15 mg. Die Höchstmenge liegt vorzugsweise bei 30 mg.

Als Trägerstoff enthält das erfindungsgemäße Ergänzungsfuttermittel Pflanzenöl und hochdispersen Trägerstoff mit einer spezifischen Oberfläche von mehr als 20 m²/g in einem Gewichts-Mengenverhältnis des Pflanzenöls zum hochdispersen Trägerstoff von 5:1 bis 20:1. Bevorzugt beträgt das Mengenverhältnis 8:1 bis 12:1. Pflanzenöl in Verbindung mit hochdispersem Trägerstoff mit einer spezifischen Oberfläche von mehr als 20 m²/g als Trägerstoff bewirkt überraschend die besonders gute Haltbarkeit der probiotischen Mikroorganismen sowie der Vitamine und der verwendeten Eisenverbindung.

Als hochdisperser Trägerstoff mit einer spezifischen Oberfläche von mehr als 20 m²/g können siliciumhaltige Verbindungen wie gefällte Kieselsäuren, Aerosil, Kieselgur, Aluminiumsilikate, Kalziumsilikate verwendet werden. Erfindungsgemäß wird bevorzugt Aerosil verwendet. Neben oder anstelle der siliciumhaltigen Verbindungen können auch solche hochdispersen, im Magen-Darm-Trakt der Jung-Säugetiere unlöslichen und ernährungsphysiologisch unbedenklichen Verbindungen wie Kalziumsulfatdihydrat, Aluminiumoxide und Magnesiumoxide in hochdisperser Form verwendet werden.

Die hochdisperse Kieselsäure bewirkt dabei zum einen als tixotrop wirkender Gelbildner, daß ein Entmischen von Trägerstoff und Wirkstoffen verhindert wird, zum anderen als Emulgator, daß die Paste zur Freisetzung der Wirkstoffe leichter verdaulich wird. Darüberhinaus hat die hochdisperse Kieselsäure eine günstige Wirkung insofern, als sie die unspezifische Immunität der Darmmukosa steigert.

Der erfindungsgemäß verwendete Trägerstoff wird vorzugsweise in Form eines Lipogels eingesetzt. Dieses Lipogel kann erhalten werden durch Dispergieren der festen Bestandteile in dem als Trägerstoff verwendeten Pflanzenöl, bis eine gleichmäßige Verteilung der festen Bestandteile erzielt und durch entsprechende Viskosität ein Entmischen der Wirk- und Trägerstoffe während der Lagerung verhindert wird.

Beispiele für das Pflanzenöl sind Sojaöl, Olivenöl, Erdnußöl, Sonnenblumenöl und Weizenkeimöl. Als bevorzugtes Pflanzenöl wird aufgrund seiner ernährungsphysiologischen und verarbeitungstechnischen Vorzüge Sojaöl verwendet.

Der Trägerstoff, der im zuvor genannten Mengenverhältnis Pflanzenöl und hochdisperse Kieselsäure enthält, führt in Verbindung mit den Probiotika hinsichtlich der Immunisierung durch die probiotischen Inhaltsstoffe des Ergänzungsfuttermittels zu einem besonderen Vorteil insofern, als Fette erst in den oberen Darmabschnitten enzymatisch zerlegt werden, so daß die probiotischen Mikroorganismen unbeschadet den Magen passieren und erst am Ort, wo sie den Beitrag zur Erhöhung der Widerstandskraft gegenüber Infektionen leisten, aus der Paste freigesetzt werden.

Das erfindungsgemäße Futtermittel enthält auf 1 x 10⁹ Keime des Mikroorganismus eine Lipase in einer Menge von zweckmäßig 50 bis 250 »g, bevorzugt von 150 bis 200 »g. Es wird eine Lipase verwendet, die aus der Gruppe der mikrobiell erzeugten Lipasen, die durch die gesteuerte Fermentation verschiedener Mikroorganismenarten gewonnen werden, und der Pankreaslipasen verschiedener Nutztierarten ausgewählt wird.

Beispielhaft für eine geeignete Lipase wird genannt das Präparat 7023 C der Firma Röhm, Darmstadt. Als Lipase wird dabei bevorzugt Pankreaslipase zur Spaltung von Fettsäureestern verwendet. Lipase unterstützt die Zersetzung des Trägerstoffs (Lipogel) in den oberen Darmabschnitten, so daß die probiotischen Mikroorganismen und die anderen Wirkstoffe (Vitamine und Eisen) in ihrer Wirkung zur Entfaltung kommen können.

Die Verwendung des erfindungsgemäßen Ergänzungsfuttermittels für Jung-Säugetiere führt zu einem deutlich besseren Immunstatus, zu einer erhöhten Widerstandskraft gegenüber Infektionskrankheiten, zu einer verbesserten Vitamin- und Eisenversorgung, zu einer Verdrängung pathogener Organismen in den oberen Darmabschnitten, zu einer besseren Futterverwertung, zu geringerer Durchfallneigung und somit zu deutlich geringeren Ausfällen der Jung-Säugetiere.

Die Menge der vorstehend erörterten Wirkstoffe im Verhältnis zu den Trägerstoffen liegt im üblichen Bereich. Zweckmäßig werden für 1 x 10⁹ Keime des Mikroorganismus und der oben beschriebenen entsprechenden Mengen der anderen Wirkstoffe 0,01 bis 5 g des Gemisches von hochdispersen Trägerstoffen mit einer spezifischen Oberfläche von mehr als 20 m²/g und Pflanzenöl als Trägerstoffe eingesetzt. Die Mindestmenge an diesen Trägerstoffen beträgt vorzugsweise 0,05 g und besonders bevorzugt etwa 0,1 g. Die obere Grenze liegt vorzugsweise bei 2 g, besonders bevorzugt bei etwa 1 g, jeweils bezogen auf 1 x 10⁹ Keime Mikroorganismus.

Bekanntlich liegen die oben genannten Wirkstoffe, insbesondere die Vitamine, in handelsüblicher Form nicht als reine Stoffe vor, sondern in Form von Gemischen mit Lösungsmitteln, Verdünnungsmitteln u.dgl., damit sie leichter gehandhabt werden können bzw. lagerfähig sind. Die oben definierten Mengen beziehen sich jedoch auf die reinen Stoffe. Die einzusetzenden Mengen an Handelsprodukten können unter Berücksichtigung des Gehaltes dieser Handelsprodukte an den reinen Stoffen, z.B. Vitamin A, leicht errechnet werden.

Das Ergänzungsfuttermittel kann auch andere Zusatzstoffe enthalten, die üblicherweise und in bekannter Weise das Wachstum der Tiere fördern. Hierzu gehören Gerbstoffe. Diese werden zweckmäßig in Mengen von etwa 20 bis 200 mg pro 10⁹ Keime des Mikroorganismus eingesetzt.

Ein anderes übliches Zusatzmittel ist Vitamin C, das in angemessenen Mengen in bekannter Weise mit verabreicht werden kann und deshalb im Ergänzungsfuttermittel enthalten sein kann.

Das Ergänzungsfuttermittel kann gleichgültig, für welche Jung-Säugetiere es eingesetzt wird, grundsätzlich alle vorstehend beschriebenen Bestandteile enthalten. Dies gilt besonders für Saugferkel. Gegenstand der Erfindung ist deshalb bevorzugt ein Ergänzungsfuttermittel für Saugferkel, enthaltend, auf 1 x 10⁹ Keime eines Mikroorganismus als Probiotikum, 1000 bis 20000 internationale Einheiten Vitamin A, 5 bis 50 mg Vitamin E, 2 bis 50 »g Vitamin B 12 und 5 bis 100 mg einer oralen verabreichbaren und assimilierbaren Eisenverbindung, berechnet als Eisen, sowie Trägerstoffe, daß dadurch gekennzeichnet ist; daß das Ergänzungsfuttermittel auf 1 x 10⁹ Keime des Mikroorganismus von 50 bis 1000 »g Lipase und als Trägerstoff Pflanzenöl und hochdispersen Trägerstoff mit einer spezifischen Oberfläche von mehr als 20 m²/g in einem Mengenverhältnis des Pflanzenöls zum hochdispersen Trägerstoff von 5:1 bis 20:1 enthält.

Gegenstand der Erfindung ist demgemäß auch die Verwendung eines derartigen Ergänzungsfuttermittels als Ergänzungsfutter zur Steigerung der Widerstandskraft für Saugferkel.

Kälber und Hunde benötigen im allgemeinen nicht die Verabreichung von assimilierbaren Eisenverbindungen. Demgemäß ist Gegenstand der Erfindung auch die Verwendung des vorstehend für Saugferkel beschriebenen Ergänzungsfuttermittels, das jedoch nicht die darin definierte Menge an Eisenverbindungen enthält, als Ergänzungsfutter zur Steigerung der Widerstandskraft für Kälber und Hunde.

Viele andere Jung-Säugetiere benötigen nicht unbedingt die vorstehend beschriebene Menge an Vitamin B 12 im Ergänzungsfuttermittel. Demgemäß ist Gegenstand der Erfindung für andere Jung-Säugetiere als Saugferkel, Kälber und Hunde, d. h. insbesondere für Katzen, Pferde, Schafe und Ziegen ein Ergänzungsfuttermittel, das weder Eisen noch Vitamin B 12 enthält.

Grundsätzlich kann man jedoch sagen, daß allen Jung-Säugetieren ein Ergänzungsfuttermittel verabreicht werden kann, das alle vorstehend beschriebenen Bestandteile enthält, das aber entsprechend den vorstehenden Ausführungen gewisse Bestandteile nicht zu enthalten braucht.

Jung-Säugetiere im Sinne der Erfindung sind insbesondere Haus-, Heim- und Nutztiere. Es kann aber auch z. B. für in zoologischen Gärten und dergleichen aufgezogene Jungtiere verwendet werden.

Soweit nichts anderes gesagt ist, sind Mengen Gewichtsmengen.

## Patentansprüche

1. Ergänzungsfuttermittel für Jung-Säugetiere, enthaltend, auf 1 x 10⁹ Keime eines Mikroorganismus als Probiotikum, 1000 bis 20000 internationale Einheiten Vitamin A und 5 bis 50 mg Vitamin E sowie Trägerstoffe,
**dadurch gekennzeichnet,** daß das
Ergänzungsfuttermittel auf 1 x 10⁹ Keime des Mikroorganismus von 50 bis 1000 »g Lipase und als Trägerstoff Pflanzenöl und hochdispersen Trägerstoff mit einer spezifischen Oberfläche von mehr als 20 m²/g in einem Mengenverhältnis des Pflanzenöls zum hochdispersen Trägerstoff von 5:1 bis 20:1 enthält.

2. Ergänzungsfuttermittel nach Anspruch 1, dadurch gekennzeichnet, daß es auf 1 x 10⁹ Keime eines Mikroorganismus als Probiotikum 5 bis 100 mg einer oral verabreichten und assimilierbaren Eisenverbindung, berechnet als Eisen, enthält.

3. Ergänzungsfuttermittel nach Anspruch 1, dadurch gekennzeichnet, daß es auf 1 x 10⁹ Keime eines Mikroorganismus als Probiotikum 2 bis 50 »g Vitamin B 12 enthält.

4. Ergänzungsfuttermittel nach Anspruch 1, dadurch gekennzeichnet, daß es auf 1 x 10⁹ Keime eines Mikroorganismus als Probiotikum 2 bis 50 »g Vitamin B 12 und 5 bis 100 mg einer oral verabreichbaren und assimilierbaren Eisenverbindung, berechnet als Eisen enthält.

5. Ergänzungsfuttermittel nach einem oder mehreren der Ansprüche 1 bis 4, dadurch gekennzeichnet, daß das Ergänzungsfuttermittel auf 1 x 10⁹ Keime des Mikroorganismus 150 bis 250 »g Lipase enthält.

6. Ergänzungsfuttermittel nach einem oder mehreren der Ansprüche 1 bis 5, dadurch gekennzeichnet, daß das Ergänzungsfuttermittel als Trägerstoff Pflanzenöl und hochdisperse Kieselsäure in einem Mengenverhältnis von 8:1 bis 12:1 enthält.

7. Ergänzungsfuttermittel nach einem oder mehreren der Ansprüche 1 bis 6, dadurch gekennzeichnet, daß es auf 1 x 10⁹ Keime eines Mikroorganismus als Probiotikum 2000 bis 10000 internationale Einheiten Vitamin A, 20 bis 30 mg Vitamin E, 5 bis 10 »g Vitamin B 12, 15 bis 30 mg einer oral verabreichbaren und assimilierbaren Eisenverbindung, berechnet als Eisen, 150 bis 200 »g Lipase und als Trägerstoff Pflanzenöl und hochdisperse Kieselsäure in einem Gewichts-Mengenverhältnis von 8:1 bis 12:1 enthält.

8. Ergänzungsfuttermittel gemäß Anspruch 2, 3 oder 4 zur Verwendung als Ergänzungsfutter zur Steigerung der Widerstandskraft für Saugferkel.

9. Ergänzungsfuttermittel gemäß Anspruch 1 oder 3 zur Verwendung als Ergänzungsfutter zur Steigerung der Widerstandskraft für Kälber oder Hunde.

10. Ergänzungsfuttermittel gemäß Anspruch 1 zur Verwendung als Ergänzungsfutter zur Steigerung der Widerstandskraft für Katzen, Pferde, Schafe oder Ziegen oder sonstige Jung-Säugetiere.

## Claims

1. Supplementary feed for young mammals, containing 1000 to 20000 international units of vitamin A and 5 to 50 mg of vitamin E on 1 x 10⁹ cells of a microorganism as a probiotic and carriers, characterised in that the supplementary food contains 50 to 1000 »g of lipase on 1 x 10⁹ cells of the microorganism and vegetable oil and a highly dispersed carrier with a specific surface area of greater than 20 m²/g in a ratio by amount of vegetable oil to highly dispersed carrier of 5:1 to 20:1 as carrier.

2. Supplementary feed according to Claim 1, characterised in that it contains 5 to 100 mg of an iron compound which can be orally administered and assimilated, calculated as iron, on 1 x 10⁹ cells of a microorganism as a probiotic.

3. Supplementary feed according to Claim 1, characterised in that it contains 2 to 50 »g of vitamin B12 on 1 x 10⁹ cells of a microorganism as a probiotic.

4. Supplementary feed according to Claim 1, characterised in that it contains 2 to 50 »g of vitamin B12 and 5 to 100 mg of an iron compound which can be orally administered and assimilated, calculated as iron, on 1 x 10⁹ cells of a microorganism as a probiotic.

5. Supplementary feed according to one or more of Claims 1 to 4, characterised in that the supplementary feed contains 150 to 250 »g of lipase on 1 x 10⁹ cells of the microorganism.

6. Supplementary feed according to one or more of Claims 1 to 5, characterised in that the supplementary feed contains vegetable oil and highly dispersed silicic acid in a ratio by amounts of 8:1 to 12:1 as a carrier.

7. Supplementary feed according to one or more of Claims 1 to 6, characterised in that it contains 2000 to 10000 international units of vitamin A, 20 to 30 mg of vitamin E, 5 to 10 »g of vitamin B12, 15 to 30 mg of an iron compound which can be orally administered and assimilated, calculated as iron, 150 to 200 »g of lipase and vegetable oil and highly dispersed silicic acid in a ratio by weight of 8:1 to 12:1 as carrier.

8. Supplementary feed according to Claim 2 or 4 for use as a supplementary feed to increase the power of resistance of suckling pigs.

9. Supplementary feed according to Claim 1 or 3 for use as supplementary feed to increase the power of resistance of calves or dogs.

10. Supplementary feed according to Claim 1 for use as a supplementary feed to increase the power of resistance of cats, horses, sheep or goats or other young mammals.

## Revendications

1. Supplément alimentaire pour jeunes mammifères qui contient pour 1 x 10⁹ germes d'un microorganisme comme probiotique, 1000 à 20 000 unités internationales de vitamine A et 5 à 50 mg de vitamine E ainsi que des véhicules, caractérisé en ce que le supplément alimentaire contient pour 1 x 10⁹ germes du microorganisme de 50 à 1000 »g de lipase et comme véhicules de l'huile végétale et du véhicule finement dispersé ayant une surface spécifique supérieure à 20 m²/g dans une proportion quantitative de l'huile végétale au véhicule finement dispersé de 5:1 à 20:1.

2. Supplément alimentaire selon la revendication 1, caractérisé en ce qu'il contient pour 1 x 10⁹ germes d'un microorganisme comme probiotique, 5 à 100 mg d'un composé de fer assimilable et administrable par voie orale.

3. Supplément alimentaire selon la revendication 1, caractérisé en ce qu'il contient pour 1 x 10⁹ germes d'un microorganisme comme probiotique, 2 à 50 »g de vitamine B 12.

4. Supplément alimentaire selon la revendication 1, caractérisé en ce qu'il contient pour 1 x 10⁹ germes d'un microorganisme comme probiotique 2 à 50 »g de vitamine B 12 et 5 à 100 mg d'un composé de fer, calculé sous forme de fer.

5. Supplément alimentaire selon l'une ou plusieurs des revendications 1 à 4, caractérisé en ce que le supplément alimentaire contient pour 1 x 10⁹ germes du microorganisme 150 à 250 »g de lipase.

6. Supplément alimentaire selon l'une ou plusieurs des revendications 1 à 5, caractérisé en ce que le supplément alimentaire contient comme véhicule de l'huile végétale et de la silice finement dispersée en proportion pondérale de 8:1 à 12:1.

7. Supplément alimentaire selon l'une ou plusieurs des revendications 1 à 6, qui contient pour 1 x 10⁹ germes d'un microorganisme comme probiotique, 2000 à 10.000 unités internationales de vitamine A, 20 à 30 mg de vitamine E, 5 à 10 »g de vitamine B 12, 15 à 30 mg d'un composé de fer assimilable et administrable par voie orale, calculé sous forme de fer, 150 à 200 »g de lipase et comme véhicule finement dispersé dans une proportion quantitative pondérale de 8:1 à 12:1.

8. Supplément alimentaire selon l'une des revendications 2, 3 ou 4 pour son utilisation en vue d'augmenter la force de résistance des porcelets de lait.

9. Supplément alimentaire selon l'une des revendications 1 ou 3, pour son utilisation en vue d'augmenter la force de résistance des veaux et des chiens.

10. Supplément alimentaire selon revendication 1, pour son utilisation en vue d'augmenter la force de résistance des chats, des chevaux, des moutons, des chèvres et autres jeunes mammifères.
